# EUROPEAN PATENT SPECIFICATION

(11) **EP 2 688 212 B1**
(45) Date of publication and mention of the grant of the patent: **14.06.2017**
(21) Application number: 12177191.9
(22) Date of filing: 19.07.2012
(51) Int. Cl.: H04B 1/3827, H04B 17/20, H04B 17/21, H04B 1/04, H04B 17/29, H04W 52/24, H04W 52/14

(54) **METHOD AND APPARATUS FOR ANTENNA TUNING AND POWER CONSUMPTION MANAGEMENT IN A COMMUNICATION DEVICE**
VERFAHREN UND VORRICHTUNG ZUR ANTENNENABSTIMMUNG UND STROMVERBRAUCHSVERWALTUNG IN EINER KOMMUNIKATIONSVORRICHTUNG
PROCÉDÉ ET APPAREIL DE RÉGLAGE D'ANTENNE ET DE GESTION DE LA CONSOMMATION D'ÉNERGIE DANS UN DISPOSITIF DE COMMUNICATION

(43) Date of publication of application: 22.01.2014
(73) Proprietor: BlackBerry Limited, Waterloo, ON N2K 0A7 (CA)
(72) Inventor: Zhu, Lizhong, Waterloo, Ontario N2L 3W8 (CA); Caci, Joseph, D., Waterloo, Ontario N2L 3W8 (CA); Manssen, Keith, Ronald, Crystal Lake, IL Illinois 60014 (US)
(74) Representative: MERH-IP Matias Erny Reichl Hoffmann Patentanwälte PartG mbB

(56) References cited:
- EP-A2- 1 079 296
- WO-A2-2012/085932
- US-A- 5 548 837
- US-A1- 2008 300 027
- US-A1- 2011 281 532
- US-A1- 2012 075 159

## Description

### FIELD OF THE DISCLOSURE

The subject disclosure relates to a communication device performance, and in particular, to a method and apparatus for antenna tuning and power consumption management in a communication device.

### BACKGROUND

Cellular telephone devices have migrated to support multi-cellular access technologies, peer-to-peer access technologies, personal area network access technologies, and location receiver access technologies, which can operate concurrently. Cellular telephone devices in the form of smartphones have also integrated a variety of consumer features such as MP3 players, color displays, gaming applications, cameras, and other features. Cellular telephone devices can be required to communicate at a variety of frequencies, and in some instances are subjected to a variety of physical and function use conditions.

As mobile communication technology continues to develop, users will likely desire higher quality of services and the ability to utilize more and more features and services.

WO 2012/085932 A2 discloses a RF signal quality enhancement system for mobile device with active dynamic radiation pattern achieved by sensing device proximity environment with property, position, orientation, signal quality and operating modes. US 2008/0300027 A1 discloses a system for reducing power consumption in a mobile computing device.

EP 1 079 296 A2 discloses an electronically steerable embedded laptop computer antenna array.

### BRIEF DESCRIPTION OF THE DRAWINGS

Reference will now be made to the accompanying drawings, which are not necessarily drawn to scale, and wherein:
FIG. 1 depicts an illustrative embodiment of a communication device that can perform antenna tuning and/or power consumption management;
FIG. 2 depicts an illustrative embodiment of a portion of a transceiver of the communication device of FIG. 1;
FIGs. 3-6 depict illustrative embodiments of a tunable matching network of the transceiver of FIG. 2;
FIG. 7 depicts an illustrative embodiment of a look-up table utilized by the communication device of FIG. 1 for controlling tunable reactive networks of FIGs. 1-6;
FIGs. 8a-11 depict illustrative physical and operational use cases of a communication device that can perform antenna tuning and power consumption management;
FIG. 12 depicts load pull test results of a WLAN RF power amplifier with respect to output power and error vector magnitude;
FIG. 13 depicts an exemplary method that can be used for tuning of a communication device and/or managing of power consumption;
FIG. 14 depicts an illustrative embodiment of a matching circuit that can be used for antenna tuning;
FIG. 15 depicts an exemplary method that can be used for tuning of a communication device;
FIG. 16 depicts an illustrative embodiment of a portion of a communication device that can perform antenna tuning and/or power consumption management; and
FIG. 17 depicts an illustrative diagrammatic representation of a machine in the form of a computer system within which a set of instructions, when executed, may cause the machine to perform any one or more of the methodologies disclosed herein.

### DETAILED DESCRIPTION

The subject disclosure describes, among other things, illustrative embodiments of enhancing communication device performance through antenna tuning based on quality of service parameter(s) and/or through power consumption management (e.g., reduction of transmit power without sacrificing desired throughput). In one or more embodiments, layers of tuning can be performed utilizing a matching network having one or more adjustable reactive elements, where the tuning layers utilize different parameters and/or goals. For example, a first layer of tuning can be performed based on tuning toward a pre-determined match (e.g., a 50Ω match or other desired match value). The first tuning layer can be an open-loop process and/or a closed loop process. A second layer of tuning can be performed based on use cases (e.g., a physical and/or operational state(s) of the communication device) and based on Total Radiated Power (TRP) and/or Total Isotropic Sensitivity (TIS). A third layer of tuning can be performed based on radiated throughput of the communication device, including Uplink (UL) and Downlink (DL) throughput. Any one or more of these tuning layers can be utilized alone or in combination with each other, and they can be utilized in various orders, including the order in the above-described example.

In one embodiment, transmit power for the communication device can be adjusted (e.g., reduced) when the radiated throughput is in a desired range (e.g., satisfies a throughput threshold). In another embodiment, the third layer of tuning can include adjusting the matching network when the radiated throughput is outside of a desired range (e.g., does not satisfy the throughput threshold). The throughput threshold can be determined based on a number of different factors, including a modulation scheme being utilized, signal strength, information provided from a remote source such as a base station, and so forth.

In one embodiment, a closed-loop tuning process can be utilized so that the antenna matching circuit is tuned towards a pre-determined match across operating Tx and Rx bands. In another embodiment, the closed-loop tuning process can be implemented for the best or better and respective TRP and TIS in each pre-defined use case (e.g., free space, handheld, handheld close to head, on-a-metal table, speaker-phone operation, etc.). In another embodiment, calibration can be performed under each pre-defined use case, where the calibration goal is not the best TRP and TIS, but rather the best or better UL and DL throughputs. In one embodiment, the closed-loop process during a Rx mode (e.g., when the Rx band is different from Tx band) can utilize a pre-defined TIS for a specific use case as a starting point and can tune based on the DL throughput. Other embodiments are contemplated by the subject disclosure.

One embodiment of the subject disclosure includes a mobile communication device having a matching network including an adjustable reactive element, an antenna coupled with the matching network, a memory storing computer instructions, and a processor coupled to the memory and the matching network. The processor, responsive to executing the computer instructions, performs operations including identifying a use case for the mobile communication device. The processor retrieves a tuning value from a look-up table of the memory that correspond to the use case, where the tuning value is empirical data based on at least one of a total radiated power or a total isotropic sensitivity. The processor tunes the matching network based on the tuning value. The processor determines radiated throughput for at least one of an uplink throughput or a downlink throughput. The processor reduces transmit power responsive to the radiated throughput satisfying a throughput threshold. The processor tunes the matching network responsive to the radiated throughput not satisfying the throughput threshold.

One embodiment of the subject disclosure includes a method in which a controller circuit of a communication device determines a radiated throughput for at least one of an uplink throughput or a downlink throughput of the communication device. The method includes reducing transmit power for the communication device responsive to the radiated throughput satisfying a throughput threshold. The method includes tuning, by the controller circuit, a matching network of the communication device responsive to the radiated throughput not satisfying the throughput threshold.

One embodiment of the subject disclosure includes a mobile communication device having a matching network including an adjustable reactive element, an antenna coupled with the matching network, and a controller circuit coupled to the matching network. The controller circuit, responsive to executing computer instructions, performs operations including adjusting transmit power responsive to a radiated throughput satisfying a throughput threshold, and tuning the matching network responsive to the radiated throughput not satisfying the throughput threshold.

Other tuning techniques and components can be utilized with the exemplary embodiments, including the techniques and components described in U.S. Application Serial No. XX/XXX,XXX filed contemporaneously herewith entitled "__________" and having docket no. 45010_10209-0139, as well as U.S. Application Serial No. XX/XXX,XXX filed contemporaneously herewith entitled "__________" and having docket no. 45250.

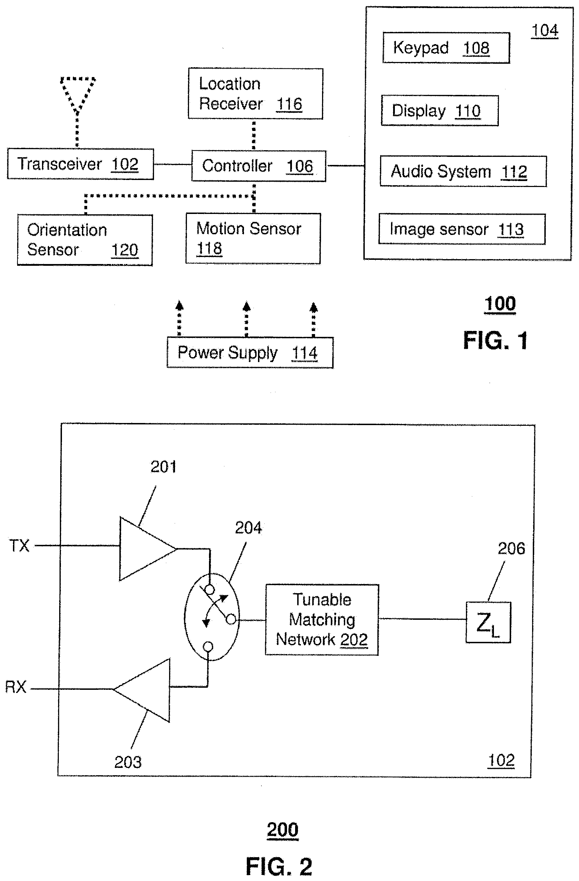

FIG. 1 depicts an illustrative embodiment of a communication device 100 that can perform antenna tuning, including based on quality of service metrics, such as UL and/or DL throughput. The communication device 100 can adjust transmit power based on a comparison of radiated throughput with a throughput threshold and can also perform antenna tuning when the radiated throughput is at an undesired level. The communication device 100 can comprise a wireline and/or wireless transceiver 102 having transmitter and receiver sections (herein transceiver 102), a user interface (UI) 104, a power supply 114, a location receiver 116, a motion sensor 118, an orientation sensor 120, and a controller 106 for managing operations thereof. The transceiver 102 can support short-range or long-range wireless access technologies such as Bluetooth, ZigBee, WiFi, DECT, or cellular communication technologies, just to mention a few. Cellular technologies can include, for example, CDMA-1X, UMTS/HSDPA, GSM/GPRS, TDMA/EDGE, EV/DO, WiMAX, SDR, LTE, as well as other next generation wireless communication technologies as they arise. The transceiver 102 can also be adapted to support circuit-switched wireline access technologies (such as PSTN), packet-switched wireline access technologies (such as TCP/IP, VoIP, etc.), and combinations thereof.

The UI 104 can include a depressible or touch-sensitive keypad 108 with a navigation mechanism such as a roller ball, a joystick, a mouse, or a navigation disk for manipulating operations of the communication device 100. The keypad 108 can be an integral part of a housing assembly of the communication device 100 or an independent device operably coupled thereto by a tethered wireline interface (such as a USB cable) or a wireless interface supporting, for example, Bluetooth. The keypad 108 can represent a numeric keypad commonly used by phones, and/or a QWERTY keypad with alphanumeric keys. The UI 104 can further include a display 110 such as monochrome or color LCD (Liquid Crystal Display), OLED (Organic Light Emitting Diode) or other suitable display technology for conveying images to an end user of the communication device 100. In an embodiment where the display 110 is touch-sensitive, a portion or all of the keypad 108 can be presented by way of the display 110 with navigation features.

The display 110 can use touch screen technology to also serve as a user interface for detecting user input. As a touch screen display, the communication device 100 can be adapted to present a user interface with graphical user interface (GUI) elements that can be selected by a user with a touch of a finger. The touch screen display 110 can be equipped with capacitive, resistive or other forms of sensing technology to detect how much surface area of a user's finger has been placed on a portion of the touch screen display. This sensing information can be used to control the manipulation of the GUI elements or other functions of the user interface. The display 110 can be an integral part of the housing assembly of the communication device 100 or an independent device communicatively coupled thereto by a tethered wireline interface (such as a cable) or a wireless interface.

The UI 104 can also include an audio system 112 that utilizes audio technology for conveying low volume audio (such as audio heard in proximity of a human ear) and high volume audio (such as speakerphone for hands free operation). The audio system 112 can further include a microphone for receiving audible signals of an end user. The audio system 112 can also be used for voice recognition applications. The UI 104 can further include an image sensor 113 such as a charged coupled device (CCD) camera for capturing still or moving images.

The power supply 114 can utilize common power management technologies such as replaceable and rechargeable batteries, supply regulation technologies, and/or charging system technologies for supplying energy to the components of the communication device 100 to facilitate long-range or short-range portable applications. Alternatively, or in combination, the charging system can utilize external power sources such as DC power supplied over a physical interface such as a USB port or other suitable tethering technologies.

The location receiver 116 can utilize location technology such as a global positioning system (GPS) receiver capable of assisted GPS for identifying a location of the communication device 100 based on signals generated by a constellation of GPS satellites, which can be used for facilitating location services such as navigation. The motion sensor 118 can utilize motion sensing technology such as an accelerometer, a gyroscope, or other suitable motion sensing technology to detect motion of the communication device 100 in three-dimensional space. The orientation sensor 120 can utilize orientation sensing technology such as a magnetometer to detect the orientation of the communication device 100 (north, south, west, and east, as well as combined orientations in degrees, minutes, or other suitable orientation metrics).

The communication device 100 can use the transceiver 102 to also determine a proximity to a cellular, WiFi, Bluetooth, or other wireless access points by sensing techniques such as utilizing a received signal strength indicator (RSSI) and/or signal time of arrival (TOA) or time of flight (TOF) measurements. The controller 106 can utilize computing technologies such as a microprocessor, a digital signal processor (DSP), and/or a video processor with associated storage memory such as Flash, ROM, RAM, SRAM, DRAM or other storage technologies for executing computer instructions, controlling, and processing data supplied by the aforementioned components of the communication device 100.

Other components not shown in FIG. 1 are contemplated by the subject disclosure. The communication device 100 can include a slot for inserting or removing an identity module such as a Subscriber Identity Module (SIM) card. SIM cards can be used for identifying and registering for subscriber services, executing computer programs, storing subscriber data, and so forth.

The communication device 100 as described herein can operate with more or less of the circuit components shown in FIG. 1.

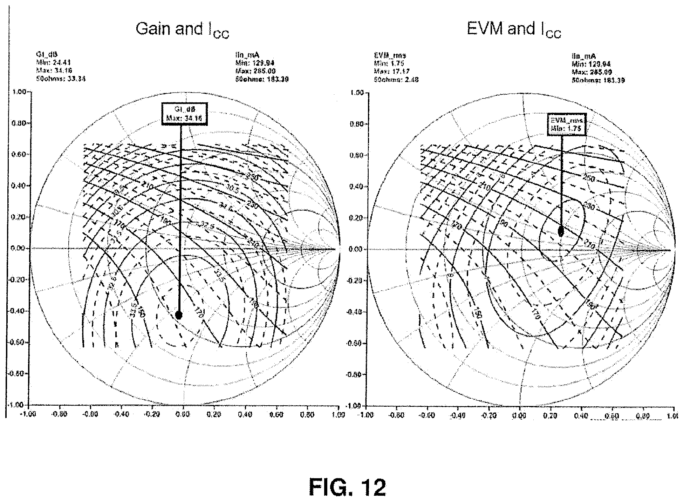

FIG. 2 depicts an illustrative embodiment of a portion of the wireless transceiver 102 of the communication device 100 of FIG. 1. In GSM applications, the transmit and receive portions of the transceiver 102 can include amplifiers 201, 203 coupled to a tunable matching network 202 that is in turn coupled to an impedance load 206. The impedance load 206 in the present illustration can be an antenna as shown in FIG. 1 (herein antenna 206). A transmit signal in the form of a radio frequency (RF) signal (Tx) can be directed to the amplifier 201 which amplifies the signal and directs the amplified signal to the antenna 206 by way of the tunable matching network 202 when switch 204 is enabled for a transmission session. The receive portion of the transceiver 102 can utilize a pre-amplifier 203 which amplifies signals received from the antenna 206 by way of the tunable matching network 202 when switch 204 is enabled for a receive session. The tunable matching network 202 can be tuned based on various parameters and using various techniques, including open-loop and/or closed-loop processes. As an example, the tunable matching network 202 can be tuned based on TRP and TIS by utilizing stored tuning data for particular use cases, where the communication device is able to identify the use case for a particular communication session. Continuing with this example, the tunable matching network 202 can be further tuned based on quality of service parameters, such as the radiated UL and/or DL throughput. For instance, during a Tx mode, a comparison can be performed between the radiated UL throughput and an ideal or desired UL throughput (e.g., a threshold throughput). If the comparison indicates that the radiated UL throughput is in a desired range then the transmit power can be reduced (e.g., via a pre-determined reduction step). This reduction can be an iterative process whereby the transmit power is reduced while maintaining the UL throughput in the desired range. If on the other hand, the comparison indicates that the radiated UL throughput is outside of the desired range then adjustments can be performed to enhance the quality of service of the communication device, such as tuning the matching network to drive the UL throughput toward the desired range. For instance, a better UL throughput can be achieved by presenting the load impedance to Tx Power Amplifier 201, which would provide better trade-off between the TRP and Error Vector Magnitude (EVM). As shown in FIG. 12, the best TRP may not translate to the best EVM, where the antenna load impedances are very far away between the highest power (gain) of 34.16dB (which directly translates to TRP) and the lowest EVM. An iterative tuning process can be performed to account for a poor EVM which would directly contribute to a low UL throughput. The radiated DL throughput can also be subject to comparison with a desired or ideal throughput resulting in a possible reduction of transmit power where extra head room in the link budget exists or resulting in actions taken to account for any in-band or out-band interference, such as antenna beam forming via amplitude and phase shifters to reduce the antenna gain towards the interference signal (e.g., applicable to both in-band and out-of-band) or an antenna matching with emphasis towards the working channel frequency to help reduce the interference signal more effectively for out-of-band and for the adjacent channels, depending on how the proximity of the adjacent channel interference signal.

Other configurations of FIG. 2 are possible for other types of cellular access technologies such as CDMA. These undisclosed configurations are contemplated by the subject disclosure.

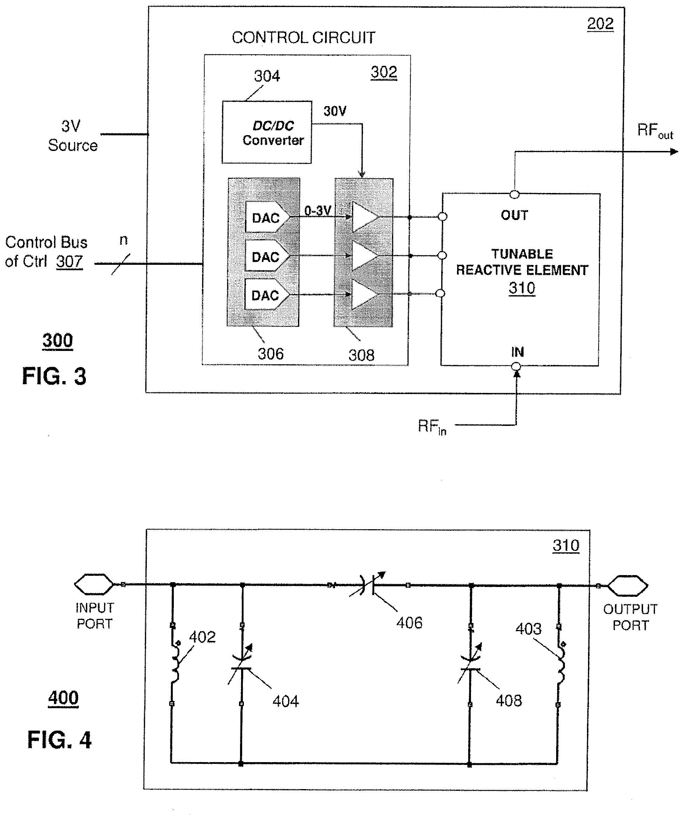

FIGs. 3-4 depict illustrative embodiments of the tunable matching network 202 of the transceiver 102 of FIG. 2. In one embodiment, the tunable matching network 202 can comprise a control circuit 302 and a tunable reactive element 310. The control circuit 302 can comprise a DC-to-DC converter 304, one or more digital to analog converters (DACs) 306 and one or more corresponding buffers 308 to amplify the voltage generated by each DAC. The amplified signal can be fed to one or more tunable reactive components 404, 406 and 408 such as shown in FIG. 4, which depicts a possible circuit configuration for the tunable reactive element 310. In this illustration, the tunable reactive element 310 includes three tunable capacitors 404-408 and two inductors 402-403 with a fixed inductance. Circuit configurations such as "Tee", "Pi", and "L" configurations for a matching circuit are also suitable configurations that can be used in the subject disclosure.

The tunable capacitors 404-408 can each utilize technology that enables tunability of the reactance of the component. One embodiment of the tunable capacitors 404-408 can utilize voltage or current tunable dielectric materials. The tunable dielectric materials can utilize, among other things, a composition of barium strontium titanate (BST). In another embodiment, the tunable reactive element 310 can utilize semiconductor varactors. Other present or next generation methods or material compositions that result in a voltage or current tunable reactive element are contemplated by the subject disclosure for use by the tunable reactive element 310 of FIG. 3.

The DC-to-DC converter 304 can receive a DC signal such as 3 volts from the power supply 114 of the communication device 100 in FIG. 1. The DC-to-DC converter 304 can use technology to amplify a DC signal to a higher range (e.g., 30 volts) such as shown. The controller 106 can supply digital signals to each of the DACs 306 by way of a control bus 307 of "n" or more wires to individually control the capacitance of tunable capacitors 404-408, thereby varying the collective reactive impedance of the tunable matching network 202, such as to achieve a desired parameter(s) including a desired UL and/or DL throughput. The control bus 307 can be implemented with a two-wire serial bus technology such as a Serial Peripheral Interface (SPI) bus (referred to herein as SPI bus 307). With an SPI bus 307, the controller 106 can transmit serialized digital signals to configure each DAC in FIG. 3. The control circuit 302 of FIG. 3 can utilize digital state machine logic to implement the SPI bus 307, which can direct digital signals supplied by the controller 106 to the DACs to control the analog output of each DAC, which is then amplified by buffers 308. In one embodiment, the control circuit 302 can be a stand-alone component coupled to the tunable reactive element 310. In another embodiment, the control circuit 302 can be integrated in whole or in part with another device such as the controller 106.

Although the tunable reactive element 310 is shown in a unidirectional fashion with an RF input and RF output, the RF signal direction is illustrative and can be interchanged. Additionally, either port of the tunable reactive element 310 can be connected to a feed point of the antenna 206, a radiating element of the antenna 206 in an on-antenna configuration, or between antennas for compensating cross-coupling when diversity antennas are used. The tunable reactive element 310 can also be connected to other circuit components of a transmitter or a receiver section such as filters, power amplifiers, and so on.

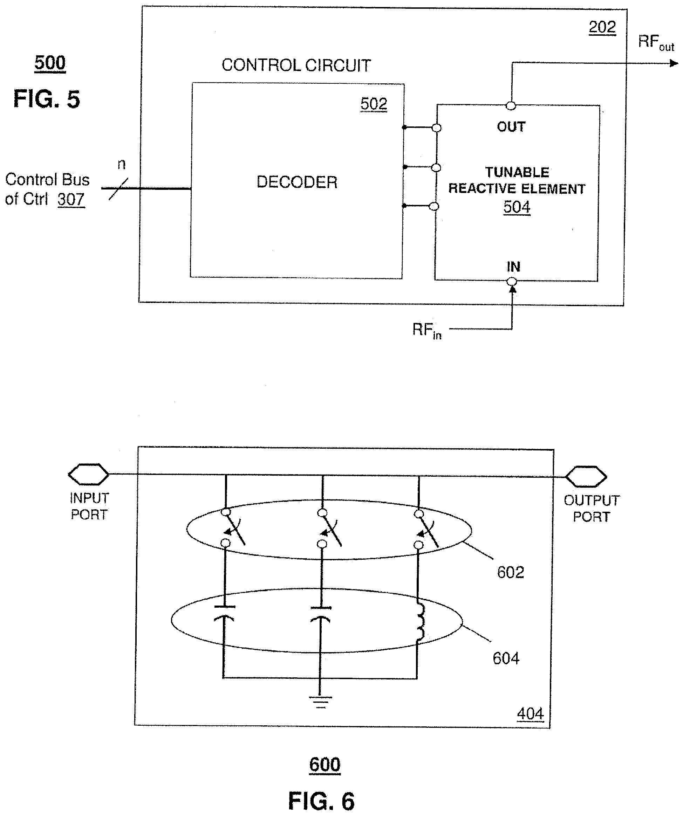

In another embodiment, the tunable matching network 202 of FIG. 2 can comprise a control circuit 502 in the form of a decoder and a tunable reactive element 504 comprising switchable reactive elements such as shown in FIG. 6. In this embodiment, the controller 106 can supply the control circuit 402 signals via the SPI bus 307, which can be decoded with Boolean or state machine logic to individually enable or disable the switching elements 602. The switching elements 602 can be implemented with semiconductor switches, micro-machined switches such as utilized in micro-electromechanical systems (MEMS), or other suitable switching technology. By independently enabling and disabling the reactive elements 607 (capacitor and/or inductor) of FIG. 6 with the switching elements 602, the collective reactive impedance of the tunable reactive element 504 can be varied by the controller 106.

The tunable reactive elements 310 and 504 of FIGs. 3 and 5, respectively, can be used with various circuit components of the transceiver 102 to enable the controller 106 to manage performance factors such as, for example, but not limited to, transmit power, transmitter efficiency, receiver sensitivity, power consumption of the communication device 100, frequency band selectivity by adjusting filter passbands, linearity and efficiency of power amplifiers, specific absorption rate (SAR) requirements, radiated throughput, TRP, TIS, and so on.

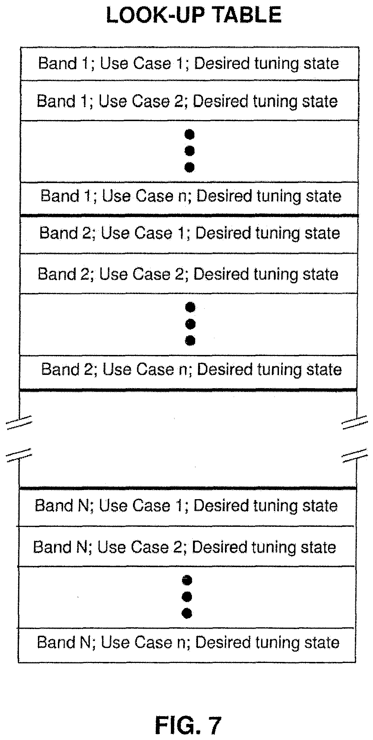

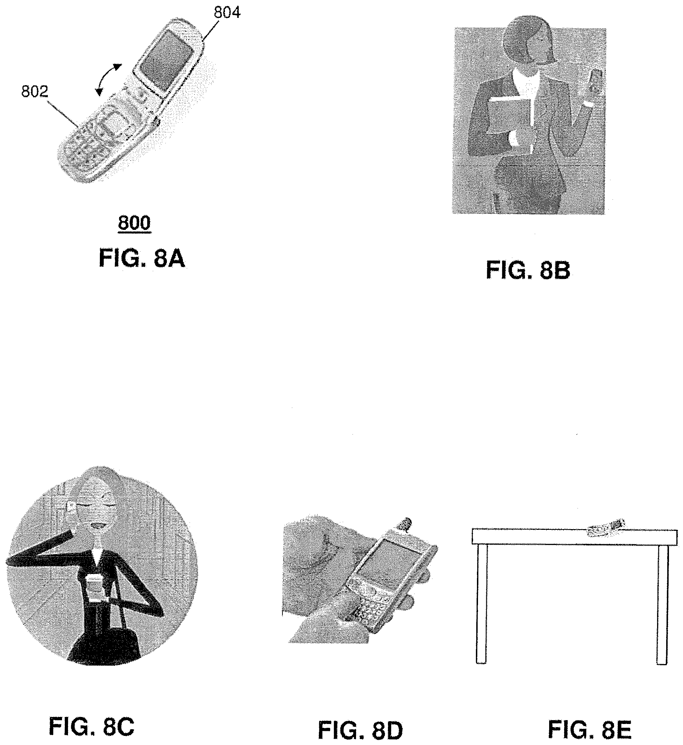

FIG. 7 depicts an illustration of a look-up table stored in memory, which can be indexed by the controller 106 of the communication device 100 of FIG. 1 according to physical and/or functional use cases of the communication device 100. A physical use case can represent a physical state of the communication device 100, while a functional use case can represent an operational state of the communication device 100. For example, for a flip phone 800 of FIG. 8a, an open flip can represent one physical use case, while a closed flip can represent another physical use case. In a closed flip state (i.e., bottom and top flips 802-804 are aligned), a user is likely to have his/her hands surrounding the top flip 802 and the bottom flip 804 while holding the phone 800, which can result in one range of load impedances experienced by an internal or retrievable antenna (not shown) of the phone 800. The range of load impedances of the internal or retrievable antenna can be determined by empirical analysis.

With the flip open a user is likely to hold the bottom flip 802 with one hand while positioning the top flip 804 near the user's ear when an audio system of the phone 800, such audio system 112 of FIG. 1, is set to low volume. If, on the other hand, the audio system 112 is in speakerphone mode, it is likely that the user is positioning the top flip 804 away from the user's ear. In these arrangements, different ranges of load impedances can be experienced by the internal or retrievable antenna, which can be analyzed empirically. The low and high volume states of the audio system 112 illustrate varying functional use cases. Other examples of use cases can include handheld operations such as shown by FIG. 8B, handheld and phone-to-head operations such as shown in FIG. 8C, handheld and typing operations as shown in FIG. 8D, and operations while on a metal table as shown in FIG. 8E. These are a few examples of use cases and more use cases can be utilized in the exemplary embodiments.

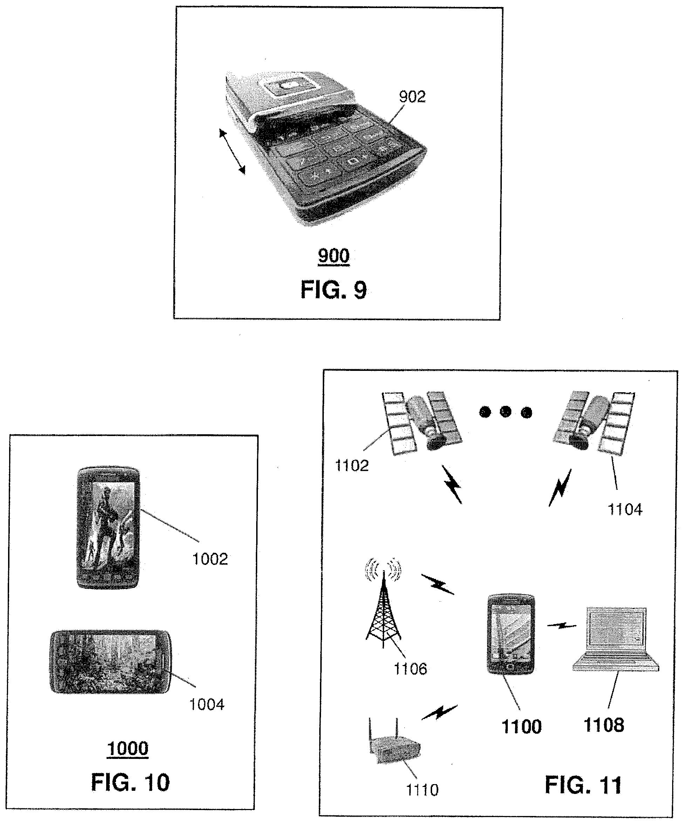

For a phone 900 with a slideable keypad 904 (illustrated in FIG. 9), the keypad in an outward position can present one range of load impedances of an internal antenna, while the keypad in a hidden position can present another range of load impedances, each of which can be analyzed empirically. For a smartphone 1000 (illustrated in FIG. 10) presenting a video game, an assumption can be made that the user is likely to hold the phone away from the user's ear in order to view the game. Placing the smartphone 1000 in a portrait position 1002 can represent one physical and operational use case, while utilizing the smartphone 1000 in a landscape position 1004 presents another physical and operational use case.

The number of hands and fingers used in the portrait mode may be determined by the particular type of game being played by the user. For example, a particular video game may require a user interface where a single finger in portrait mode is sufficient for controlling the game. In this scenario, it may be assumed that the user is holding the smartphone 1000 in one hand in portrait mode and using a finger with the other. By empirical analysis, a possible range of impedances of the internal antenna can be determined when using this video game in portrait mode. Similarly, if the video game selected has a user interface that is known to require two hands in landscape mode, another estimated range of impedances of the internal antenna can be determined empirically.

A multimode phone 1100 capable of facilitating multiple access technologies such as GSM, CDMA, LTE, WiFi, GPS, and/or Bluetooth in two or more combinations can provide additional insight into possible ranges of impedances experienced by two or more internal antennas of the multimode phone 1100. For example, a multimode phone 1100 that provides GPS services by processing signals received from a constellation of satellites 1102, 1104 can be empirically analyzed when other access technologies are also in use. Suppose, for instance, that while navigation services are enabled, the multimode phone 1100 is facilitating voice communications by exchanging wireless messages with a cellular base station 1106. In this state, an internal antenna of the GPS receiver may be affected by a use case of a user holding the multimode phone 1100 (e.g., near the user's ear or away from the user's ear). The affect on the GPS receiver antenna and the GSM antenna by the user's hand position can be empirically analyzed.

Suppose in another scenario that the antenna of a GSM transceiver is in close proximity to the antenna of a WiFi transceiver. Further assume that the GSM frequency band used to facilitate voice communications is near the operational frequency of the WiFi transceiver. Also assume that a use case for voice communications may result in certain physical states of the multimode phone 1100 (e.g., slider out), which can result in a probable hand position of the user of the multimode phone 1100. Such a physical and functional use case can affect the impedance range of the antenna of the WiFi transceiver as well as the antenna of the GSM transceiver.

A close proximity between the WiFi and GSM antennas and the near operational frequency of the antennas may also result in cross-coupling between the antennas, thereby changing the load impedance of each of the antennas. Cross-coupling under these circumstances can be measured empirically. Similarly, empirical measurements of the impedances of other internal antennas can be measured for particular physical and functional use configurations when utilizing Bluetooth, WiFi, Zigbee, or other access technologies in peer-to-peer communications with another communication device 1108 or with a wireless access point 1110.

The number of physical and functional use cases of a communication device 100 can be substantial when accounting for combinations of access technologies, frequency bands, antennas of multiple access technologies, antennas configured for diversity designs such as multiple-input and multiple output (MIMO) antennas, and so on. These combinations, however, can be empirically analyzed to load impedances and affects on other tunable circuits. The empirical data collected can be recorded in the look-up table of FIG. 7 and indexed according to corresponding combinations of physical and functional use cases. The information stored in the look-up table can be used in open-loop RF tuning applications to initialize tunable circuit components of a transceiver, as well as, tuning algorithms that control operational aspects of the tunable circuit components.

The empirical data of the look-up table of FIG. 7 can be based on desired TRP and/or TIS, which can be indexed based on use cases. In this example, the empirical data can be obtained through chamber testing under various conditions, including under various use cases. In another embodiment, the empirical data can be indexed (in combination with, or in place of, the use cases) based on other factors including operating frequency, device mode of operation, device operating metrics, and so forth. In another embodiment, the empirical data of the look-up table of FIG. 7 can be based on desired UL and/or DL throughput, which can be indexed based on use cases. In this embodiment, the empirical data can be indexed (in combination with, or in place of, the use cases) based on other factors including operating frequency, device mode of operation, device operating metrics, and so forth.

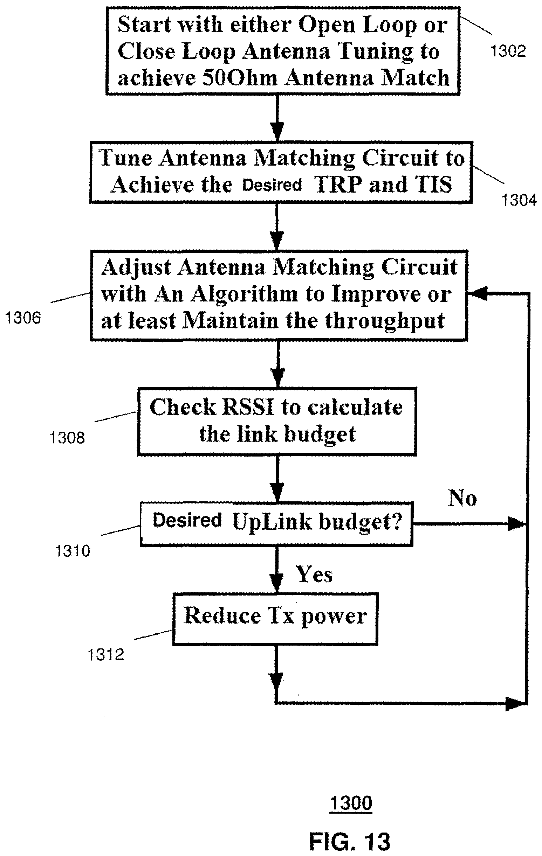

FIG. 13 depicts an illustrative method 1300 that operates in portions of the devices of FIGs. 1-11. In addition to, or in place of, achieving a better pre-determined antenna match (e.g., 50Ω) for each radio Tx/Rx band and/or in addition to, or in place of, achieving better TRP/TIS in various use cases (e.g., free space, handheld, and other limited modes of operation), method 1300 can conduct antenna tuning for each radio Tx/Rx band with the goal of achieving a better or best QoS with a lower or lowest power consumption. In order to achieve this goal, a dynamic antenna tuning and radio system control is implemented with the target of achieving a better or best throughput as a quantitative measure of QoS.

Method 1300 can begin at 1302 in which tuning is performed to achieve or otherwise tune toward a pre-determined match, such as a 50Ω match. The tuning can be performed across operating Tx and Rx bands. The particular tuning algorithm employed can vary and can include an open-loop process and/or a closed-loop process.

At 1304, tuning can be performed based on TRP and TIS. In one embodiment, the tuning is performed to improve the TRP and TIS, and utilizes stored tuning data (e.g., stored in a look-up table of the memory of the communication device) that is indexed based on use cases. For instance, the communication device can determine that it is in a hands-free operation state and can retrieve tuning data for the hands-free operation state that enables improvement of the TRP and improvement of the TIS depending on the Tx or Rx mode of operation. The tuning data can be utilized in the adjustment of the tunable reactive elements of the matching network, such as elements 310 or 504 of FIGs. 3 and 5, respectively. The tuning data can be adjustment values to be utilized for the adjustable reactive element (e.g., a particular bias voltage) and/or can be information from which such adjustments values can be derived or otherwise determined.

At 1306, throughput can be utilized for tuning of the matching network to improve or maintain a desired UL or DL throughput for the communication device. At 1308, the link budget can be calculated, such as through determining received signal strength indicator, transmit power and antenna gain. Based on an analysis of the link budget at 1310, method 1300 can either proceed to 1312 for adjusting the transmit power (e.g. reducing the transmit power) or return to 1306 for tuning the matching network in an effort to improve or maintain the radiated throughput.

For example, radiated UL throughput can be compared with a desired UL throughput (e.g., a throughput threshold), such as through use of RSSI measurement, to determine whether tuning is to be performed to improve or maintain the radiated UL throughput. If tuning is to be utilized (e.g., the UL throughput is outside of a desired range) then an iterative process can be employed whereby the matching network is adjusted and the UL throughput is again compared with the throughput threshold to drive the UL throughput toward a desired value. Improvement of the UL throughput can be achieved by presenting the load impedance to a Tx power amplifier, which would provide better trade-off between TRP and EVM. If on the other hand, the UL throughput is in a desired range, then an iterative process can be employed whereby the transmit power is adjusted (e.g. reduced in incremental steps) and the UL throughput is again compared with the throughput threshold to maintain the UL throughput in the desired range. The incremental step sizes that are utilized for the transmit power reduction can be pre-determined or can be dynamic.

Continuing with this example, radiated DL throughput can be compared with a throughput threshold, such as through use of RSSI measurement, to determine whether a reduction of transmit power can be performed. If the DL throughput is in a desired range, then an iterative process can be employed whereby the transmit power is adjusted (e.g., reduced in incremental steps) based on extra head room in the link budget. The incremental step sizes that are utilized for the transmit power reduction can be pre-determined or can be dynamic. If on the other hand, the DL throughput is not in a desired range then a determination can be made as to whether in-band and/or out-band interference exists. If it is determined that such interference exists then the communication device can perform antenna beam forming (e.g., via amplitude and phase shifters) to reduce the antenna gain towards the interference signal (e.g., applicable to both in-band and out-of-band interference) and/or can perform antenna matching with an emphasis towards the working channel frequency to reduce the interference signal more effectively for out-of-band, as well as for the adjacent channels, depending on the proximity of the adjacent channel interference signal.

In one embodiment, a closed-loop antenna tuning process can be initially performed such as at 1302, where the antenna matching circuit is tuned towards a pre-determined match (e.g., 50Ω) across operating Tx and Rx bands. The closed-loop tuning can utilize feedback from one or more detectors, where the feedback provides operating metric(s) of the communication device, including one or more of RF voltage, output power, return loss, received power, current drain, transmitter linearity, and Voltage Standing Wave Ratio data. The operating metric(s) can be used to determine the desired adjustment to the matching network, such as through an iterative process that tunes and that retrieves the feedback. The particular type of detector utilized for obtaining the feedback can vary and can include one or more directional couplers. The detector(s) can be positioned in various configurations in the communication device, including one or more of connected between the antenna and a transceiver; connected between the antenna and the matching network (with or without a detector connected between the matching network and the transceiver); and connected between the matching network and the transceiver (with or without a detector connected in proximity to the antenna (e.g., between the antenna and the matching network)). The feedback can be obtained at various times during the communication session, including during transmission by the transceiver.

In one embodiment, a closed-loop tuning process (e.g., at step 1304 of method 1300) can be utilized to achieve better or best TRP and/or TIS in each pre-defined use case (e.g., free space, handheld, handheld close to head, on-a-metal table, hands-free, speaker-phone operations, flip opened, slider out, etc.). In this example, the closed-loop tuning process can have an advantage over an open-loop process (that does not utilize feedback) in Tx mode, because the closed-loop process knows (through proper calibration) what load impedance the antenna would present to the PA output. In one embodiment, closed-loop tuning can be calibrated under each pre-defined use case (e.g., via empirical data gathered during chamber testing), where the calibration goal may not be the better or best TRP and TIS, but rather the better or best UL and DL throughputs. In this example, further tuning improvement or optimization can be utilized during real life radiated usage cases, where additional fine tuning based on steps 1306-1312 of method 1300 can be used to adapt the real environment for the better or best UL and DL throughputs.

Continuing with this example, a closed-loop tuning process during Rx mode (e.g., when the Rx band is different from Tx band) may not know the impedance that the antenna will present to the low noise amplifier of the communication device. The impedance presented to the low noise amplifier can be known via calibration in each pre-defined use case for the best TIS in an open-loop tuning process. But, a closed-loop tuning process may not dynamically provide the best TIS in the real life usages. In one embodiment, by changing the performance goal from TIS to DL throughput, an algorithm can be utilized to dynamically control the closed-loop tuning for the better or best DL throughput. In one embodiment, the tuning algorithm may start from the best or desired TIS in each pre-defined user case (derived from empirical data during chamber testing). In another embodiment, when in-band or out-of-band interference occurs or is detected, the closed-loop tuning process can adopt the similar method as the open-loop tuning process to overcome the interference with the goal of the best or better throughput.

The different tuning processes of the exemplary embodiments can be utilized together or can be utilized separately, and can include combining steps or features from one embodiment with steps or features from another embodiment. One or more of the exemplary embodiments can employ antenna tuning towards a 50Ω match across several and fairly wide Tx and Rx radio bands. One or more of these exemplary embodiments can also employ antenna tuning to optimize, improve or otherwise adjust TRP and/or TIS with known steady state use cases based on information from various sensors. One or more of the exemplary embodiments can employ dynamic antenna tuning towards the 50Ω match with a closed-loop tuning process. One or more of the exemplary embodiments can employ antenna tuning to achieve better TRP and/or TIS without utilizing tuning toward a 50Ω match via calibration and empirical data stored in look-up tables.

One or more of the exemplary embodiments can take into account that an optimized TRP and/or TIS may not provide the best user experience. In one or more embodiments, the best user experience can be defined by quality of service parameters, such as voice quality and/or data throughput. QoS is not directly proportional or otherwise 100% related to TRP and TIS, which are just two variables of QoS function.

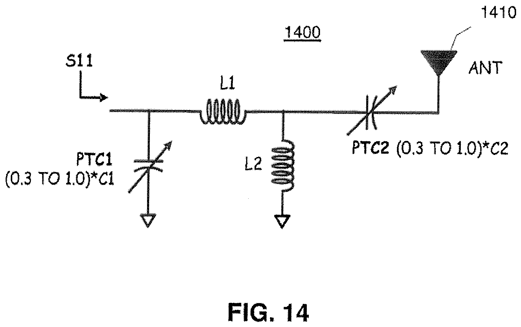

Referring to FIG. 14, an exemplary matching circuit 1400 is illustrated that can be used in tuning in method 1300, such as at step 1302. Additional tuning processes and components are described in U.S. Patent Publication No. 20090121963 to Greene, the disclosure of which is hereby incorporated by reference. The illustrated matching circuit 1400 includes a first tunable capacitance PTC1, a first impedance L1, a second impedance L2 and a second tunable capacitance PTC2. A PTC is a tunable capacitor with a variable dielectric constant that can be controlled by a tuning algorithm, such as via the control circuit 302 of FIG. 3. The first tunable capacitance PTC1 can be coupled to ground on one end and to the output of a transceiver on the other end. The node of PTC1 that is coupled to the transceiver is also connected to a first end of the first impedance L1. The second impedance L2 is connected between the second end of the first impedance L1 and ground. The second end of the first impedance L1 is also coupled to a first end of the second tunable capacitance PTC2. The second end of the second tunable capacitance PTC2 is then coupled to an antenna 1710.

The tunable capacitances can be tuned over a range such as, for example, 0.3 to 1 times a nominal value C. For instance, if the nominal value of the tunable capacitance is 5 pF, the tunable range can be from 1.5 to 5 pF. In an exemplary embodiment, PTC1 can have a nominal capacitance of 5 pF and is tunable over the 0.3 to 1 times range, the first impedance L1 can have a value of 3.1 nH, and the second impedance L2 can have a value of 2.4 nH and the second tunable capacitance PTC2 can have a nominal value of 20 pF and can be tuned over a range of 0.3 to 1 times the nominal value. It should be understood that these values are exemplary and other ranges of values can also be employed. It will be appreciated that the tunable capacitances in the illustrated embodiment could be tuned or adjusted over their ranges in an effort to improve the matching characteristics of the antenna 1410 under various operating conditions. Thus, under various use conditions, operating environments and at various frequencies of operation, the tunable capacitances can be adjusted to attain a desired level of performance. The tuning goals can vary and can include tuning toward a pre-determined match (e.g., 50Ω match), tuning toward a desired UL and/or DL throughput, and so forth.

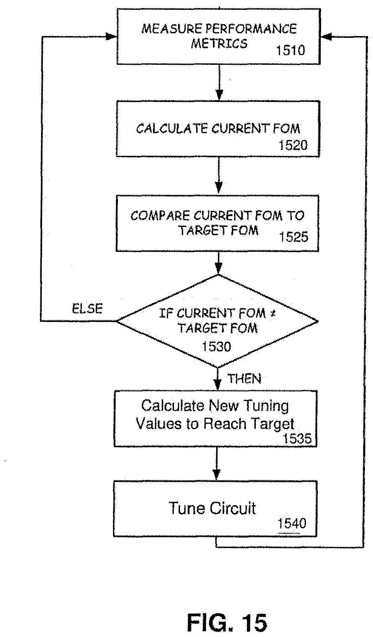

Referring additionally to FIG. 15, a flow diagram is provided that illustrates a tuning process based on a Figure of Merit that can be used in conjunction with method 1300. This tuning process can be one or more of the tuning steps or layers of method 1300 or can be a combination of tuning steps or layers. At 1510, performance parameters or metrics can be measured and used as feedback. The performance metrics utilized may vary over various usage scenarios, over modulation being utilized (e.g., Frequency Division Multiplexing or FDM, Time Division Multiplexing or TDM, etc.), based on system settings and/or carrier requirements, etc. For instance, in an illustrative embodiment, the performance metrics can include one or more of RSSI, transmitter return loss, output power, current drain, and/or transmitter linearity. A current figure of merit (FOM) can be calculated at 1520 from the performance metrics, as well as other criteria. The current FOM can then be compared to a target FOM at 1525. The target FOM can be the optimal or desired performance requirements or objective. In one embodiment, the target FOM can be defined by a weighted combination of any measurable or predictable metrics.

Thus, depending on the goal or objective, the target FOM can be defined to tune the matching network to achieve particular goals or objectives. As a nonlimiting example, the objectives may focus on TRP, TIS, UL throughput, DL throughput, and so forth. Furthermore, the target FOM may be significantly different for a TDM system and an FDM system. It should be understood that the target FOM may be calculated or selected based on various operating conditions, prior measurements, and modes of operation.

New tuning values can be calculated or selected at 1535 when the current FOM is not equal to or within a desired range of the target FOM. In some embodiments, new tuning values may be stored as new default tuning values of the transmitter at the given state of operation.

In one embodiment, the tuning algorithm can tune one or more of the tunable components of the circuit of FIG. 14 at step 1540, measure the new FOM (e.g., based on RSSI and radiated throughput) at steps 1520-1530, and re-adjust or retune the matching network accordingly in steps 1535-1540 in a continuous loop. This process can adapt a tunable circuit from a non-matched or undesired state towards a matched or desired state one step at a time. This process can be continued or repeated to attain and/or maintain performance at the target FOM. Thus, the process identified by steps 1510 through 1540 can be repeated periodically as needed, or otherwise. The looping illustrated in FIGs. 13 and 15 can be beneficial because even if performance at the target FOM is attained, adjustments may be necessary as the mode of operation (such as usage conditions) of the communication device changes and/or the performance of the transmitter, the antenna or the matching circuitry change over time. In one embodiment, power consumption management can include selectively reducing transmit power in accordance with step 1312 of method 1300 (while maintaining a desired radiated throughput) and selectively increasing transmit power when necessary or desirable based on other circumstances. The power consumption management process enables selectively increasing and reducing transmit power in accordance with quality of service goals and parameters.

In other embodiments, the tunable components can be set based on look-up tables or a combination of look-up tables and by performing fine-tuning adjustments. For instance, the step of calculating tuning values at step 1535 may involve accessing initial values from a look-up table and then, on subsequent loops, fine tuning the values of the components in the circuit of FIG. 14.

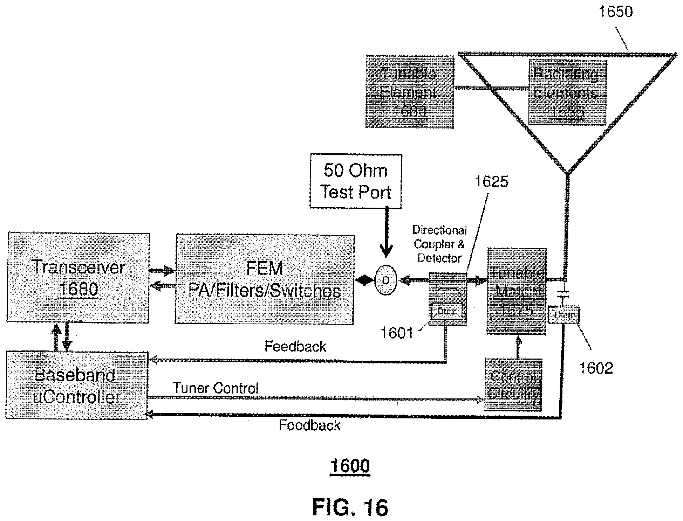

FIG. 16 depicts an exemplary embodiment of a portion of a communication device 1600 (such as device 100 in FIG. 1) having a tunable matching network which can include, or otherwise be coupled with, a number of components such as a directional coupler, a sensor IC, control circuitry and/or a tuner. The tunable matching network can include various other components in addition to, or in place of, the components shown, including components described above with respect to FIGs. 1-6. In addition to the detector 1601 coupled to the directional coupler 1625, there is shown a detector 1602 coupled to the RF line feeding the antenna 1650. A tunable matching network 1675 can be coupled to the antenna 1650 and a transceiver 1680 (or transmitter and/or receiver) for facilitating communication of signals between the communication device 1600 and another device or system. In this exemplary embodiment, the tunable match can be adjusted using all or a portion of the detectors for feedback to the tuning algorithm.

Communication device 1600 can perform tuning and transmit power adjustment according to method 1300. For example, signals can be provided to the matching network 1675 to enable tuning towards a 50Ω match. Additional signals can be provided to the matching network 1675 to enable tuning based on TPR and TIS for an identified use case(s) for the communication device 1600. RSSI can be calculated based on data retrieved from one or more of the measuring devices 1601, 1602, 1625. The RSSI can be utilized to calculate the link budget for the communication device to determine whether the radiated throughput satisfies a throughput threshold (in which case transmit power reduction may be implemented) or whether the radiated throughput is outside of the desired range in which case additional tuning of the matching network 1675 toward the desired throughput can be performed.

Communication device 1600 can include one or more radiating elements 1655 of the antenna 1650. One or more tunable elements 1680 can be connected directly with one or more of the radiating elements 1655 to allow for tuning of the antenna 1650 in conjunction with or in place of tuning of the matching network 1675. The tunable elements 1680 can be of various types as described herein, including electrically tunable capacitors. The number and configuration of the tunable elements 1680 can be varied based on a number of factors, including whether the tuning is an open loop or a closed loop process. In one embodiment, all of the radiating elements 1655 has at least one tunable element 1680 connected thereto to allow for tuning of the radiating element. In another embodiment, only a portion of the radiating elements 1655 have a tunable element 1680 connected thereto. Like the matching network 1675, the tunable elements 1680 can be tuned based on a quality of service parameter, such as the radiating UL and DL throughputs.

In one or more embodiments, the antenna tuning and power consumption management described in the exemplary embodiments can be applied to multi-antenna systems, including systems that utilize main and auxiliary antennas and systems that use Multiple-In Multiple-Out (MIMO) configurations. The antenna tuning can be applied to select antennas of the multiple antenna system or can be applied to all of the antennas of the multiple antenna system. The multiple antenna systems can utilize matching networks, such as connected at a feedpoint of one or more of the antennas and/or can utilize on-antenna tuning with tunable elements directly connected to the antennas radiating elements.

Upon reviewing the aforementioned embodiments, it would be evident to an artisan with ordinary skill in the art that said embodiments can be modified, reduced, or enhanced without departing from the scope and spirit of the claims described below. For example, other information can be utilized for determining the throughput threshold, such as the modulation scheme being implemented at the communication device, signal strength, information received from a base station, the distance from the base station, and so forth.

The use cases can include a number of different states associated with the communication device, such as flip-open, flip-closed, slider-in, slider-out (e.g., Qwerty or numeric Keypad), speaker-phone on, speaker-phone off, hands-free operation, antenna up, antenna down, other communication modes on or off (e.g., Bluetooth/WiFi/GPS), particular frequency band, and/or transmit or receive mode. The use case can be based on object or surface proximity detection (e.g., a user's hand or a table). Other environmental effects can be included in the open loop process, such as temperature, pressure, velocity and/or altitude effects. The open loop process can take into account other information, such as associated with a particular location (e.g., in a building or in a city surrounded by buildings), as well as an indication of being out of range.

The exemplary embodiments can utilize combinations of open loop and closed loop processes, such as tuning a tunable element based on both a use case and a measured operating parameter (e.g., measured by a detector in proximity to the antenna and/or measured by a directional coupler between the matching network and the transceiver). In other examples, the tuning can utilize one process and then switch to another process, such as using closed loop tuning and then switching to open loop tuning based on particular factors associated with the communication device, including the UL and/or DL throughput.

In one embodiment, the tuning of the matching network(s) can be performed in combination with look-up tables where one or more desirable performance characteristics of a communication device 100 can be defined in the form of the FOMs. The communication device can be adapted to find a range of tuning states that achieve the desired FOMs by sweeping a mathematical model in fine increments to find global optimal performance with respect to the desired FOMs. In this example embodiment, the look-up table can be indexed (e.g., by the controller 106 of the communication device 100 of FIG. 1) during operation according to band and/or use case.

In one embodiment, the tuning algorithm can apply a translation to the tuning values of the matching network derived during the transmitter time slot, to improve performance during the receive time slot. During the design of the transmitter and receiver circuitry, the characteristics of performance between the transmitter operation and receiver operation can be characterized. This characterization can then be used to identify an appropriate translation to be applied. The translation may be selected as a single value that is applicable for all operational states and use cases or, individual values which can be determined for various operational states and use cases.

Other information (from local or remote sources) can also be utilized in one or more of the tuning steps, including use of profile information or other data received from a base station. Examples of other information and other tuning methodologies usable with the embodiments of the present disclosure are described in U.S. Patent Application Publication 20110086630 to Manssen, the disclosure of which is hereby incorporated by reference.

The exemplary embodiments can utilize on-antenna tuning elements (in addition to or in place of a matching network element), which can be directly connected with the radiating element(s), including high band (HB) and low band (LB) radiating elements and/or a portion of the radiating elements. Other embodiments are contemplated by the subject disclosure.

It should be understood that devices described in the exemplary embodiments can be in communication with each other via various wireless and/or wired methodologies. The methodologies can be links that are described as coupled, connected and so forth, which can include unidirectional and/or bidirectional communication over wireless paths and/or wired paths that utilize one or more of various protocols or methodologies, where the coupling and/or connection can be direct (e.g., no intervening processing device) and/or indirect (e.g., an intermediary processing device such as a router).

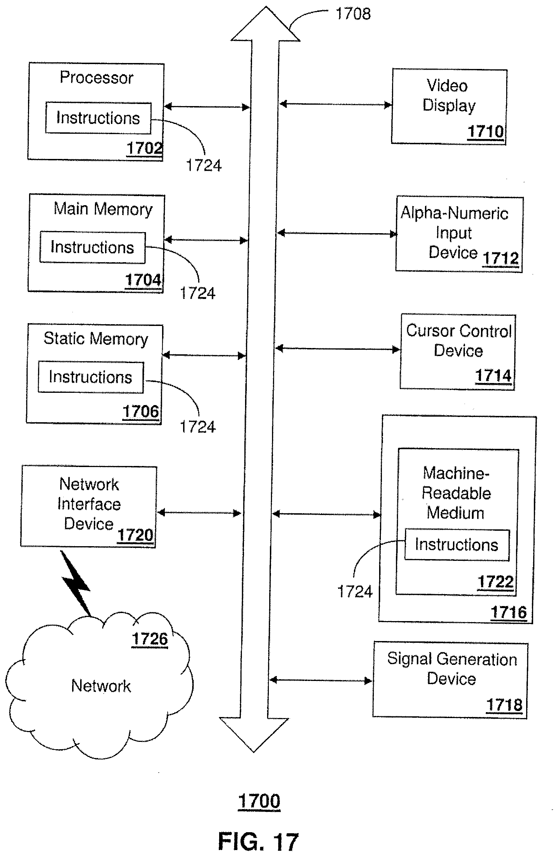

FIG. 17 depicts an exemplary diagrammatic representation of a machine in the form of a computer system 1700 within which a set of instructions, when executed, may cause the machine to perform any one or more of the methods discussed above. One or more instances of the machine can operate, for example, as the communication device 100 of FIG. 1 or the control circuit 302 associated with tunable reactive element 310 in FIG. 3 or the control circuit 502 associated with tunable reactive element 504 of FIG. 5. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment.

The machine may comprise a server computer, a client user computer, a personal computer (PC), a tablet PC, a smart phone, a laptop computer, a desktop computer, a control system, a network router, switch or bridge, or any machine capable of executing a set of instructions (sequential or otherwise) that specify actions to be taken by that machine. It will be understood that a communication device of the subject disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methods discussed herein.

The computer system 1700 may include a processor (or controller) 1702 (e.g., a central processing unit (CPU), a graphics processing unit (GPU, or both), a main memory 1704 and a static memory 1706, which communicate with each other via a bus 1708. The computer system 1700 may further include a video display unit 1710 (e.g., a liquid crystal display (LCD), a flat panel, or a solid state display. The computer system 1700 may include an input device 1712 (e.g., a keyboard), a cursor control device 1714 (e.g., a mouse), a disk drive unit 1716, a signal generation device 1718 (e.g., a speaker or remote control) and a network interface device 1720.

The disk drive unit 1716 may include a tangible computer-readable storage medium 1722 on which is stored one or more sets of instructions (e.g., software 1724) embodying any one or more of the methods or functions described herein, including those methods illustrated above. The instructions 1724 may also reside, completely or at least partially, within the main memory 1704, the static memory 1706, and/or within the processor 1702 during execution thereof by the computer system 1700. The main memory 1704 and the processor 1702 also may constitute tangible computer-readable storage media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the subject disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the tangible computer-readable storage medium 622 is shown in an example embodiment to be a single medium, the term "tangible computer-readable storage medium" should be taken to include a single medium or multiple media (e.g., a centralized or distributed database, and/or associated caches and servers) that store the one or more sets of instructions. The term "tangible computer-readable storage medium" shall also be taken to include any non-transitory medium that is capable of storing or encoding a set of instructions for execution by the machine and that cause the machine to perform any one or more of the methods of the subject disclosure.

The term "tangible computer-readable storage medium" shall accordingly be taken to include, but not be limited to: solid-state memories such as a memory card or other package that houses one or more read-only (non-volatile) memories, random access memories, or other re-writable (volatile) memories, a magneto-optical or optical medium such as a disk or tape, or other tangible media which can be used to store information. Accordingly, the disclosure is considered to include any one or more of a tangible computer-readable storage medium, as listed herein and including art-recognized equivalents and successor media, in which the software implementations herein are stored.

Although the present specification describes components and functions implemented in the embodiments with reference to particular standards and protocols, the disclosure is not limited to such standards and protocols. Each of the standards for Internet and other packet switched network transmission (e.g., TCP/IP, UDP/IP, HTML, HTTP) represent examples of the state of the art. Such standards are from time-to-time superseded by faster or more efficient equivalents having essentially the same functions. Wireless standards for device detection (e.g., RFID), short-range communications (e.g., Bluetooth, WiFi, Zigbee), and long-range communications (e.g., WiMAX, GSM, CDMA, LTE) are contemplated for use by computer system 1700.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, are contemplated by the subject disclosure.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A mobile communication device (100), comprising:
a matching network (202) including an adjustable reactive element (310);
an antenna (206) coupled with the matching network (202);
a memory (1704, 1706) configured to store computer instructions; and
a processor (1702) coupled to the memory (1704, 1706) and the matching network (202), wherein the processor (1702) is configured to perform, responsive to executing the computer instructions, operations comprising:
identifying a use case for the mobile communication device (100);
retrieving a tuning value from a look-up table of the memory (1704, 1706) that corresponds to the use case, wherein the tuning value is empirical data based on at least one of a total radiated power or a total isotropic sensitivity;
tuning the matching network (202) based on the tuning value;
determining radiated throughput for at least one of an uplink throughput or a downlink throughput;
reducing transmit power responsive to the radiated throughput satisfying a throughput threshold, the reducing of the transmit power being an iterative process based on a power reduction step size; and
tuning the matching network (202) responsive to the radiated throughput not satisfying the throughput threshold.

2. The mobile device (100) of claim 1, wherein the tuning of the matching network (202) responsive to the radiated throughput not satisfying the throughput threshold comprises performing an iterative adjustment of the adjustable reactive element (310) based on a comparison of the radiated throughput and the throughput threshold to adjust the radiated throughput toward the throughput threshold.

3. The mobile device (100) of claim 1 or 2, wherein the processor (1702) is configured to perform, responsive to executing the computer instructions, operations comprising:
tuning the matching network (202) toward a pre-determined match prior to the tuning of the matching network (202) based on the tuning value.

4. The mobile device (100) of any preceding claim, wherein the use case corresponds to at least one of a flip open state, a slider out state, a hand's free operation state, hand-held operation state, ear-piece speaker operation state, or a speaker-phone operation state.

5. The mobile device (100) of any preceding claim, wherein the power reduction step size is a pre-determined step size for the reduction of the transmit power, and wherein the iterative process comprises determining a received signal strength indicator.

6. The mobile device (100) of any preceding claim, wherein the reducing of the transmit power responsive to the radiated throughput satisfying the throughput threshold comprises determining a received signal strength indicator and determining head room for a link budget.

7. The mobile device of any preceding claim, wherein the adjustable reactive element (310) comprises a voltage tunable capacitor, a semiconductor varactor, a micro-electro-mechanical systems MEMS varactor, a semiconductor switched capacitor, a MEMS switched capacitor, or a ferroelectric capacitor.

8. A method comprising:
identifying, by a controller circuit (1702) of a communication device (100), a use case for the communication device (100);
retrieving, by the controller circuit (1702) of the communication device (100), a tuning value from a look-up table of a memory (1704, 1706) that corresponds to the use case, wherein the tuning value is empirical data based on at least one of a total radiated power or a total isotropic sensitivity;
tuning, by the controller circuit (1702) of the communication device (100), an adjustable reactive element (310) of a matching network (202) based on the tuning value,
determining, by the controller circuit (1702) of the communication device (100), a radiated throughput for at least one of an uplink throughput or a downlink throughput of the communication device (100);
reducing transmit power for the communication device (100) responsive to the radiated throughput satisfying a throughput threshold, the reducing of the transmit power being an iterative process based on a power reduction step size; and
tuning, by the controller circuit (1702), the matching network (202) of the communication device (100) responsive to the radiated throughput not satisfying the throughput threshold.

9. The method of claim 8, wherein the use case corresponds to at least one of a flip open state, a slider out state, a hand's free operation state, hand-held operation state, ear-piece speaker operation state, or a speaker-phone operation state.

10. The method of claim 8, comprising:
tuning the matching network (202) toward a pre-determined match prior to the tuning of the matching network (202) based on the tuning value.

11. The method of any of claims 8 to 10, wherein the power reduction step size is a pre-determined step size for the reduction of the transmit power, and wherein the iterative process comprises determining a received signal strength indicator.

12. The method of any of claims 8 to 11, wherein the reducing of the transmit power responsive to the radiated throughput satisfying the throughput threshold comprises determining a received signal strength indicator and determining head room for a link budget.

13. The method of any of claims 8 to 12, wherein the matching network (202) comprises a voltage tunable capacitor, a semiconductor varactor, a micro-electro-mechanical systems MEMS varactor, a semiconductor switched capacitor, a MEMS switched capacitor, or a ferroelectric capacitor.

## Patentansprüche

1. Eine mobile Kommunikationsvorrichtung (100), die aufweist:
ein Anpassungsnetzwerk (202) mit einem anpassbaren reaktiven Element (310);
eine Antenne (206), die mit dem Anpassungsnetzwerk (202) gekoppelt ist;
einen Speicher (1704, 1706), der konfiguriert ist zum Speichern von Computeranweisungen; und
einen Prozessor (1702), der mit dem Speicher (1704, 1706) und dem Anpassungsnetzwerk (202) gekoppelt ist, wobei der Prozessor (1702) konfiguriert ist zum Durchführen, in Reaktion auf ein Ausführen der Computeranweisungen, von Operationen, die aufweisen:
Identifizieren eines Anwendungsfalls für die mobile Kommunikationsvorrichtung (100);
Abrufen eines Abstimmungswerts aus einer Nachschlagetabelle des Speichers (1704, 1706), der dem Anwendungsfall entspricht, wobei der Abstimmungswert empirische Daten basierend auf zumindest eines aus einer Gesamtstrahlungsleistung oder einer isotropen Gesamtempfindlichkeit ist;
Abstimmen des Anpassungsnetzwerks (202) basierend auf dem Abstimmungswert;
Bestimmen eines abgestrahlten Durchsatzes für zumindest eines aus einem Uplink-Durchsatz oder einen Downlink-Durchsatz;
Reduzieren einer Sendeleistung in Reaktion darauf, dass der abgestrahlte Durchsatz eine Durchsatzschwelle erfüllt, wobei das Reduzieren der Sendeleistung ein iterativer Prozess basierend auf einer Leistungsreduktionsschrittgröße ist; und
Abstimmen des Anpassungsnetzwerks (202) in Reaktion darauf, dass der abgestrahlte Durchsatz die Durchsatzschwelle nicht erfüllt.

2. Die mobile Vorrichtung (100) gemäß Anspruch 1, wobei das Abstimmen des Anpassungsnetzwerks (202) in Reaktion darauf, dass der abgestrahlte Durchsatz die Durchsatzschwelle nicht erfüllt, aufweist ein Durchführen einer iterativen Anpassung des anpassbaren reaktiven Elements (310) basierend auf einem Vergleich des abgestrahlten Durchsatzes und der Durchsatzschwelle, um den abgestrahlten Durchsatz hin zu der Durchsatzschwelle anzupassen,

3. Die mobile Vorrichtung (100) gemäß Anspruch 1 oder 2, wobei der Prozessor (1702) konfiguriert ist zum Durchführen, in Reaktion auf ein Ausführen der Computeranweisungen, von Operationen, die aufweisen:
Abstimmen des Anpassungsnetzwerks (202) hin zu einer vorgegebenen Übereinstimmung vor dem Abstimmen des Anpassungsnetzwerks (202) basierend auf dem Abstimmungswert.

4. Die mobile Vorrichtung (100) gemäß einem vorhergehenden Anspruch, wobei der Anwendungsfall zumindest einem aus einem Aufklappen-Zustand, einem Herausschieben-Zustand, einem "nicht gehalten"-Betriebszustand, einem handgehaltenen Betriebszustand, einem Hörmuschel-Lautsprecher-Betriebszustand oder einem Freisprechtelefon-Betriebszustand entspricht.

5. Die mobile Vorrichtung (100) gemäß einem vorhergehenden Anspruch, wobei die Schrittgröße der Leistungsreduzierung eine vorgegebene Schrittgröße für die Reduzierung der Sendeleistung ist und wobei der iterative Prozess ein Bestimmen eines Empfangssignalstärkeindikators aufweist.

6. Die mobile Vorrichtung (100) gemäß einem vorhergehenden Anspruch, wobei das Reduzieren der Sendeleistung in Reaktion darauf, dass der abgestrahlte Durchsatz die Durchsatzschwelle erfüllt, ein Bestimmen eines Empfangssignalstärkeindikators und ein Bestimmen einer Reserve für ein Verbindungsbudget aufweist.

7. Die mobile Vorrichtung gemäß einem vorhergehenden Anspruch, wobei das anpassbare reaktive Element (310) einen spannungsabstimmbaren Kondensator, einen Halbleiter-Varaktor, einen MEMS(micro-electro-mechanical systems)-Varaktor, einen Halbleiterschaltkondensator, einen MEMS-geschalteten Kondensator oder einen ferroelektrischen Kondensator aufweist.

8. Ein Verfahren, das aufweist:
Identifizieren, durch eine Steuervorrichtungsschaltung (1702) einer Kommunikationsvorrichtung (100), eines Anwendungsfalls für die Kommunikationsvorrichtung (100);
Abrufen, durch die Steuervorrichtungsschaltung (1702) der Kommunikationsvorrichtung (100), eines Abstimmungswerts aus einer Nachschlagetabelle des Speichers (1704, 1706), der dem Anwendungsfall entspricht, wobei der Abstimmungswert empirische Daten basierend auf zumindest eines aus einer Gesamtstrahlungsleistung oder einer isotropen Gesamtempfindlichkeit ist;
Abstimmen, durch die Steuervorrichtungsschaltung (1702) der Kommunikationsvorrichtung (100), eines anpassbaren reaktiven Elements (310) eines Anpassungsnetzwerks (202) basierend auf dem Abstimmungswert, Bestimmen, durch die Steuervorrichtungsschaltung (1702) der Kommunikationsvorrichtung (100), eines abgestrahlten Durchsatzes für zumindest eines aus einem Uplink-Durchsatz oder einen Downlink-Durchsatz der Kommunikationsvorrichtung (100);
Reduzieren einer Sendeleistung für die Kommunikationsvorrichtung (100) in Reaktion darauf, dass der abgestrahlte Durchsatz eine Durchsatzschwelle erfüllt, wobei das Reduzieren der Sendeleistung ein iterativer Prozess basierend auf einer Leistungsreduktionsschrittgröße ist; und
Abstimmen, durch die Steuervorrichtungsschaltung (1702), des Anpassungsnetzwerks (202) der Kommunikationsvorrichtung (100) in Reaktion darauf, dass der abgestrahlte Durchsatz die Durchsatzschwelle nicht erfüllt.

9. Das Verfahren gemäß Anspruch 8, wobei der Anwendungsfall zumindest einem aus einem Aufklappen-Zustand, einem Herausschieben-Zustand, einem "nicht gehalten"-Betriebszustand, einem handgehaltenen Betriebszustand, einem Hörmuschel-Lautsprecher-Betriebszustand oder einem Freisprechtelefon-Betriebszustand entspricht.

10. Das Verfahren gemäß Anspruch 8, das aufweist:
Abstimmen des Anpassungsnetzwerks (202) hin zu einer vorgegebenen Übereinstimmung vor dem Abstimmen des Anpassungsnetzwerks (202) basierend auf dem Abstimmungswert.

11. Das Verfahren gemäß einem der Ansprüche 8 bis 10, wobei die Schrittgröße der Leistungsreduzierung eine vorgegebene Schrittgröße für die Reduzierung der Sendeleistung ist und wobei der iterative Prozess ein Bestimmen eines Empfangssignalstärkeindikators aufweist.

12. Das Verfahren gemäß einem der Ansprüche 8 bis 11, wobei das Reduzieren der Sendeleistung in Reaktion darauf, dass der abgestrahlte Durchsatz die Durchsatzschwelle erfüllt, ein Bestimmen eines Empfangssignalstärkeindikators und ein Bestimmen einer Reserve für ein Verbindungsbudget aufweist.

13. Das Verfahren gemäß einem der Ansprüche 8 bis 12, wobei das Anpassungsnetzwerk (202) einen spannungsabstimmbaren Kondensator, einen Halbleiter-Varaktor, einen MEMS(micro-electro-mechanical systems)-Varaktor, einen Halbleiterschaltkondensator, einen MEMS-geschalteten Kondensator oder einen ferroelektrischen Kondensator aufweist.

## Revendications

1. Dispositif de communication mobile (100) comprenant :
un réseau d'adaptation (202) comprenant un élément réactif ajustable (310) ;
une antenne (206) couplée au réseau d'adaptation (202) ;
une mémoire (1704, 1706) configurée pour stocker des instructions d'ordinateur ; et
un processeur (1702) couplé à la mémoire (1704, 1706) et au réseau d'adaptation (202), le processeur (1702) étant configuré pour, en exécutant les instructions d'ordinateur, exécuter les étapes consistant à :
identifier une situation d'utilisation du dispositif de communication mobile (100) ;
obtenir dans une table de consultation de la mémoire (1704, 1706) une valeur de syntonisation qui correspond à la situation d'utilisation, la valeur de syntonisation consistant en données empiriques fondées sur au moins soit la puissance rayonnée totale, soit la sensibilité isotrope totale ;
syntoniser le réseau d'adaptation (202) en fonction de la valeur de syntonisation ;
déterminer le débit rayonné pour au moins soit un débit montant, soit un débit descendant ;
réduire la puissance d'émission si le débit rayonné répond à un seuil de débit, la réduction de la puissance d'émission constituant un processus itératif se fondant sur la valeur d'un degré de réduction de la puissance ; et
syntoniser le réseau d'adaptation (202) si le débit rayonné ne répond pas au seuil de débit.

2. Dispositif mobile (100) selon la revendication 1, dans lequel l'étape de syntonisation du réseau d'adaptation (202), lorsque le débit rayonné ne répond pas au seuil de débit, comprend l'étape consistant à réaliser un ajustement itératif de l'élément réactif ajustable (310) en fonction d'une comparaison du débit rayonné et du seuil de débit afin d'ajuster le débit rayonné en le rapprochant du seuil de débit.

3. Dispositif mobile (100) selon la revendication 1 ou 2, dans lequel le processeur (1702) est configuré pour, en exécutant les instructions d'ordinateur, exécuter l'étape consistant à :
syntoniser le réseau d'adaptation (202) en direction d'une adaptation prédéterminée avant la syntonisation du réseau d'adaptation (202) en fonction de la valeur de syntonisation.

4. Dispositif mobile (100) selon l'une quelconque des revendications précédentes, dans lequel la situation d'utilisation correspond à au moins l'un des états suivants : état d'ouverture du volet, état d'extraction d'un élément coulissant, état de fonctionnement en mains libres, état de fonctionnement tenu en main, état de fonctionnement avec haut-parleur auriculaire, état de fonctionnement avec casque.

5. Dispositif mobile (100) selon l'une quelconque des revendications précédentes, dans lequel la valeur d'un degré de réduction de la puissance est une valeur de degré prédéterminée pour la réduction de la puissance d'émission et dans lequel le processus itératif comprend l'étape consistant à déterminer un indicateur d'intensité du signal reçu.

6. Dispositif mobile (100) selon l'une quelconque des revendications précédentes, dans lequel l'étape de réduction de la puissance d'émission, après que le débit rayonné répond au seuil de débit, comprend l'étape consistant à déterminer un indicateur d'intensité du signal reçu et à déterminer la marge qui subsiste dans un budget de liaisons.

7. Dispositif mobile (100) selon l'une quelconque des revendications précédentes, dans lequel l'élément réactif ajustable (310) comprend un condensateur réglable en tension, un varactor semiconducteur, un varactor à système micro-électromécanique, MEMS pour « *Micro-Electro-Mechanical System* », un condensateur semiconducteur commuté, un condensateur MEMS commuté ou un condensateur ferroélectrique.

8. Procédé comprenant les étapes consistant à :
identifier, par un circuit de commande (1702) d'un dispositif de communication (100), une situation d'utilisation du dispositif de communication mobile (100) ;
obtenir, par le circuit de commande (1702) du dispositif de communication (100), dans une table de consultation de la mémoire (1704, 1706), une valeur de syntonisation qui correspond à la situation d'utilisation, la valeur de syntonisation consistant en données empiriques fondées sur au moins soit la puissance rayonnée totale, soit la sensibilité isotrope totale ;
syntoniser, par le circuit de commande (1702) du dispositif de communication (100), un élément réactif ajustable (310) d'un réseau d'adaptation (202) en fonction de la valeur de syntonisation ;
déterminer, par le circuit de commande (1702) du dispositif de communication (100), un débit rayonné pour au moins soit un débit montant, soit un débit descendant du dispositif de communication (100) ;
réduire la puissance d'émission du dispositif de communication (100) si le débit rayonné répond à un seuil de débit, la réduction de la puissance d'émission constituant un processus itératif se fondant sur la valeur d'un degré de réduction de la puissance ; et
syntoniser le réseau d'adaptation (202), par le circuit de commande (1702) du dispositif de communication (100), si le débit rayonné ne répond pas au seuil de débit.

9. Procédé selon la revendication 8, dans lequel la situation d'utilisation correspond à au moins l'un des états suivants : état d'ouverture du volet, état d'extraction d'un élément coulissant, état de fonctionnement en mains libres, état de fonctionnement tenu en main, état de fonctionnement avec haut-parleur auriculaire, état de fonctionnement avec casque.

10. Procédé selon la revendication 8, comprenant en outre l'étape consistant à :
syntoniser le réseau d'adaptation (202) en direction d'une adaptation prédéterminée avant la syntonisation du réseau d'adaptation (202) en fonction de la valeur de syntonisation.

11. Procédé selon l'une quelconque des revendications 8 à 10, dans lequel la valeur d'un degré de réduction de la puissance est une valeur de degré prédéterminée pour la réduction de la puissance d'émission et dans lequel le processus itératif comprend l'étape consistant à déterminer un indicateur d'intensité du signal reçu.

12. Procédé selon l'une quelconque des revendications 8 à 11, dans lequel l'étape de réduction de la puissance d'émission, après que le débit rayonné répond au seuil de débit, comprend l'étape consistant à déterminer un indicateur d'intensité du signal reçu et à déterminer la marge qui subsiste dans un budget de liaisons.

13. Procédé selon l'une quelconque des revendications 8 à 12, dans leqeul le réseau d'adaptation (202) comprend un condensateur réglable en tension, un varactor semiconducteur, un varactor à système micro-électromécanique, MEMS pour « *Micro-Electro-Mechanical System* », un condensateur semiconducteur commuté, un condensateur MEMS commuté ou un condensateur ferroélectrique.
